Europäisches Patentamt

European Patent Office    (11) Veröffentlichungsnummer: **0 167 484**

Office européen des brevets    **B1**

(12) **EUROPÄISCHE PATENTSCHRIFT**

(45) Veröffentlichungstag der Patentschrift:    (51) Int. Cl.⁴: **F 16 B   13/14**
13.01.88

(21) Anmeldenummer: **85810253.6**

(22) Anmeldetag: **03.06.85**

(54) Mittels aushärtender Masse verankerbares Befestigungselement.

(30) Priorität: **06.07.84  DE 3425041**

(43) Veröffentlichungstag der Anmeldung:
**06.01.86 Patentblatt 86/2**

(45) Bekanntmachung des Hinweises auf die Patenterteilung:
**13.01.88 Patentblatt 88/2**

(84) Benannte Vertragsstaaten:
**AT CH DE FR GB LI**

(56) Entgegenhaltungen:
**AT-B-348 226**
**DE-A-2 743 301**
**DE-A-3 151 659**

(73) Patentinhaber: **HILTI Aktiengesellschaft, FL- 9494 Schaan (LI)**

(72) Erfinder: **Hügel, Robert, Eichendorffstrasse 9, D-8912 Kaufering (DE)**
Erfinder: **Leibhard, Erich, Bauweberstrasse 2, D-8000 München 71 (DE)**

(74) Vertreter: **Wildi, Roland, Hilti Aktiengesellschaft Patentabteilung, FL- 9494 Schaan (LI)**

EP 0 167 484 B1

LIBER, STOCKHOLM 1988

## Beschreibung

Die Erfindung betrifft ein hülsenförmiges, mittels einer aushärtenden Masse in einem Bohrloch verankerbares Befestigungselement, das wenigstens über einen Teil seiner Länge eingeprägte Bereiche aufweist.

Mittels aushärtender Massen verankerbare Befestigungselemente werden wegen ihrer Vorteile, wie Fehlen eines Spreizdruckes, gute Beständigkeit gegen chemische und andere äussere Einflüsse sowie relativ einfachen Setzvorgang, für viele Anwendungen eingesetzt, bei denen die bisher bekannten Spreizdübel nicht einsetzbar sind oder sich auf die Dauer nicht bewährt haben.

Bei den bisher bekannten Lösungen bestehen im Prinzip zwei unterschiedliche Arten von Befestigungselementen. Bei den vorzugsweise mit Aussengewinde versehenen Ankerstangen wird in der Regel zunächst die aushärtende Masse in das Bohrloch eingebracht und dann die Ankerstange drehend und/oder schlagend in die im Bohrloch angeordnete Masse eingetrieben.

Bei den zur Lastbefestigung mittels Schrauben, Gewindebolzen oder dergleichen vorzugsweise mit Innengewinde versehenen Ankerhülsen wird meist zuerst die Ankerhülse ins Bohrloch eingesetzt und dann die aushärtende Masse durch die Ankerhülse hindurch oder direkt in den zwischen der Ankerhülse und dem Bohrloch bestehenden Ringraum eingespritzt (DE-A-2 743 301). Eine weitere Möglichkeit (DE-A-3 151 659) besteht darin, eine Siebhülse zu verwenden, die vor dem Einsetzen ins Bohrloch mit aushärtender Masse gefüllt wird. Das Herauspressen der Masse aus der Siebhülse erfolgt dann beim Einführen eines Befestigungselementes in die Siebhülse. Dieser Vorgang ist relativ umständlich und ergibt insbesondere bei aushärtenden Massen mit hoher Viskosität, dh sehr zähflüssigen Massen, Probleme. Bei beiden Setzarten besteht das Problem eines genügenden Formschlusses der Ankerhülse mit der aushärtenden Masse. Ausserdem kann beim Einbringen der Masse das Innengewinde der Ankerhülse verschmutzt werden, so dass es nicht mehr brauchbar ist.

Nach dem teilweisen oder vollständigen Aushärten der Masse wird ein mit Aussengewinde versehenes Befestigungselement in das Innengewinde der Ankerhülse eingeschraubt. Dabei muss von der mittels der aushärtenden Masse verankerten Ankerhülse ein entsprechendes Gegendrehmoment aufgebracht werden, um ein Mitdrehen der Ankerhülse zu verhindern. Um dies zu erreichen, weist eine bekannte, mittels einer aushärtenden Masse verankerbare Ankerhülse an ihrer Mantelfläche Einprägungen auf, welche teilweise gleichzeitig auch mit Austrittsöffnungen für die aushärtende Masse versehen sind. Diese Einprägungen genügen zwar meist für den axialen Formschluss der Ankerhülse mit der aushärtenden Masse. Bezüglich der Verdrehsicherung haben sich solche einzelne Einprägungen jedoch nicht bewährt. Bei einer zu frühen Belastung der Verankerungshülse kann diese in der noch nicht völlig ausgehärteten Masse durchdrehen, so dass der erforderliche Verankerungswert nicht mehr erreichbar ist. Bei dem genannten Befestigungselement sind die einzelnen Einprägungen ausserdem relativ tief, so dass eine genügende Benetzung der Ankerhülse mit der aushärtenden Masse im Bereich der Einprägungen nicht immer möglich ist.

Der Erfindung liegt die Aufgabe zugrunde, ein mittels einer aushärtenden Masse verankerbares Befestigungselement zu schaffen, das einfach herstellbar und setzbar ist und ausserdem gute Verankerungswerte ermöglicht.

Gemäss der Erfindung wird dadurch erreicht, dass die eingeprägten Bereiche einen mehrkantförmigen Querschnitt aufweisen.

Der Querschnitt der eingeprägten Bereiche kann somit beispielsweise 3-, 4-, 6- oder 8-kantförmig sein. Das Einprägen solcher Bereiche ist relativ einfach und kann beispielsweise nach dem Rollen eines aus Blech bestehenden Befestigungselementes erfolgen.

Aus herstellungstechnischen Gründen ist es zweckmässig, dass die eingeprägten Bereiche 4-kantförmigen Querschnitt aufweisen. Ein 4-kantförmiger Querschnitt weist beispielsweise gegenüber einem 3-kantförmigen Querschnitt den Vorteil auf, dass die erforderliche Verformung des Befestigungselementes gering ist, und dass beim Pressen der eingeprägten Bereiche jeweils zwei Backen einander gegenüberliegen. Ein 4-kantförmiger Querschnitt ermöglicht das Aufnehmen hoher Drehmomente und axialer Kräfte.

Im Prinzip können die eingeprägten Bereiche beliebig lang dimensioniert werden. Da das Befestigungselement jedoch neben Drehmomenten auch axiale Kräfte aufnehmen muss, ist es vorteilhaft, dass die Länge der eingeprägten Bereiche etwa das 0,2- bis 0,5-fache des Aussendurchmessers des Befestigungselementes beträgt. Eine solche Dimensionierung gewährleistet, dass die in axialer Richtung wirkenden Kräfte auf eine genügende Anzahl Schultern verteilt werden können.

Auch der Abstand der eingeprägten Bereiche kann im Prinzip beliebig gewählt werden. Durch den Abstand der einzelnen eingeprägten Bereiche und die Gesamtlänge des Befestigungselementes ist jedoch die Anzahl der eingeprägten Bereiche begrenzt. Für eine Optimierung der Verankerungswerte ist es daher zweckmässig dass der Abstand der eingeprägten Bereiche das 0,3- bis 0,5-fache des Aussendurchmessers des Befestigungselementes beträgt. Die Abstände sowie die Länge der eingeprägten Bereiche können über die Länge des Befestigungselementes auch variiert werden.

Das erfindungsgemässe Befestigungselement wird vorzugsweise entsprechend den mit Aussengewinde versehenen Befestigungselementen in die im voraus in das Bohrloch eingebrachte aushärtende Masse eingetrieben. Dabei wird die aushärtende Masse zur Seite in allfällig vorhandene Hohlräume sowie in Richtung der Bohrlochmündung verdrängt. Um eine gute Benetzung des Befestigungselementes mit der aushärtenden Masse zu ermöglichen, ist es daher vorteilhaft, dass die Tiefe der eingeprägten Bereiche zum rückwärtigen Ende des Befestigungselementes hin abnimmt. Die eingeprägten Bereiche mit der grössten Tiefe befinden sich somit in der Nähe des Bohrlochgrundes, während die Bereiche mit geringerer Tiefe sich rückwärtig daran anschliessen.

Wie erwähnt, wird das Befestigungselement vorzugsweise in die bereits in das Bohrloch eingebrachte aushärtende Masse eingetrieben. Um ein Eindringen der Masse in das Befestigungselement und somit eine Verschmutzung desselben zu verhindern, ist es zweckmässig, dass das Befestigungselement an seinem vorderen Ende verschlossen ist. Das Verschliessen des Befestigungselementes kann beispielsweise durch Umbiegen entsprechender Lappen oder durch Einsetzen eines Pfropfens erreicht werden.

Das Befestigungselement kann an sich auch mit Aussengewinde oder anderen Anschlussmöglichkeiten versehen werden. Besonders vorteilhaft ist jedoch eine Ausführung, bei der das Befestigungselement an seinem rückwärtigen Endbereich mit einem Innengewinde versehen ist. Ein solches Innengewinde bietet vielfältige Anschlussmöglichkeiten und ist gegen Beschädigungen gut geschützt.

Die Erfindung soll nachstehend anhand der sie beispielsweise wiedergebenden Zeichnungen näher erläutert werden. Es zeigen:

Fig. 1 ein erfindungsgemässes Befestigungselement, in perspektivischer Darstellung,

Fig. 2 das Befestigungselement gemäss Fig. 1, teilweise längsgeschnitten,

Fig. 3 einen Querschnitt durch das in Fig. 2 dargestellte Befestigungselement, entlang der Linie III-III.

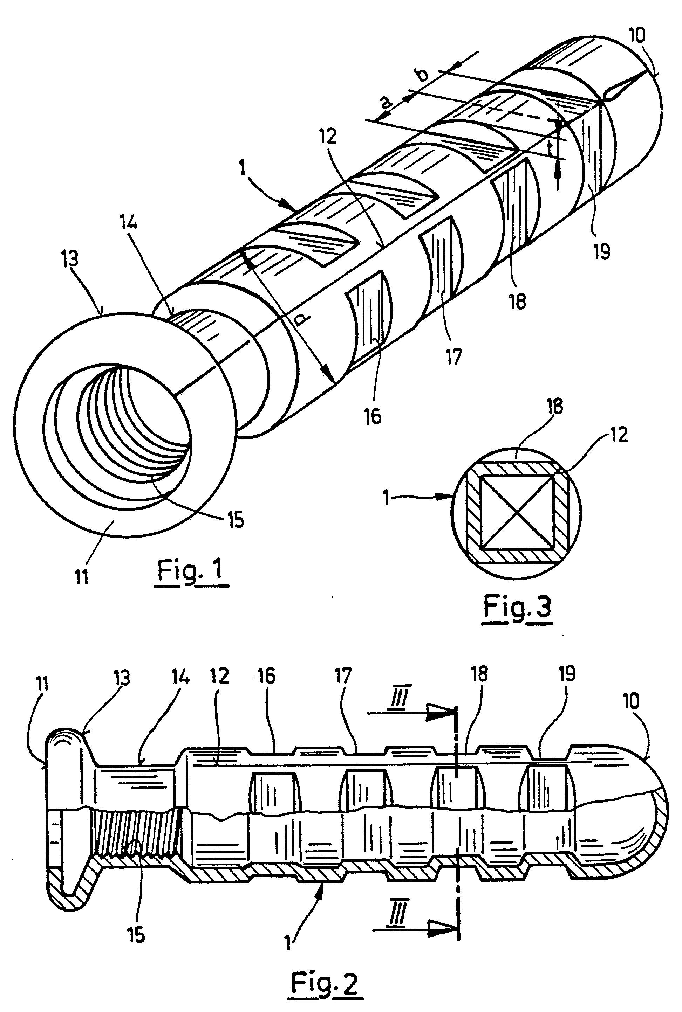

Das aus den Fig. 1 bis 3 ersichtliche Befestigungselement besteht aus einem insgesamt mit 1 bezeichneten Dübelkörper. Der Dübelkörper 1 weist ein vorderes Ende 10 sowie ein rückwärtiges Ende 11 auf. Der Dübelkörper 1 ist beispielsweise aus gerolltem Blech hergestellt und weist daher einen vom vorderen Ende 10 bis zum rückwärtigen Ende 11 verlaufenden, geschlossenen Längsschlitz 12 auf. Der Dübelkörper 1 wird mit dem vorderen Ende 10 voraus in ein Bohrloch eingeführt. Um ein Eindringen der zuvor in das Bohrloch eingebrachten aushärtenden Masse in den Dübelkörper 1 zu verhindern, ist dieser an seinem vorderen Ende 10 verschlossen. Das rückwärtige Ende 11 ist mit einem den übrigen Dübelkörper radial etwas überragenden Flansch 13 versehen.

Der Flansch 13 dient beim Einführen des Dübelkörpers 1 in ein Bohrloch beispielsweise als axialer Anschlag. Anschliessend an den Flansch 13 weist der Dübelkörper 1 ein im Durchmesser etwas reduziertes Halsteil 14 auf. Der Dübelkörper 1 ist im Bereich des Halsteils 14 mit einem Innengewinde 15 versehen. Zwischen dem Halsteil 14 und dem vorderen Ende 10 weist der Dübelkörper 1 vier axial hintereinander liegende, eingeprägte Bereiche 16, 17, 18 und 19 auf.

Wie insbesondere die Figuren 1 und 3 zeigen, weisen die eingeprägten Bereiche 16, 17, 18 und 19 einen 4-kantförmigen Querschnitt auf. Die Tiefe t ist jedoch bei den eingeprägten Bereichen 16, 17, 18 und 19 unterschiedlich und nimmt zum rückwärtigen Ende 11 des Dübelkörpers 1 hin ab. Dies ermöglicht eine bessere Benetzung des Dübelkörpers 1 mit der zuvor in das Bohrloch eingebrachten aushärtenden Masse. Die Länge b der eingeprägten Bereiche 16, 17, 18 und 19 beträgt etwa ein Drittel des Aussendurchmessers d des Dübelkörpers 1. Der Abstand a der eingeprägten Bereiche 16, 17, 18 und 19 beträgt etwa das 0,4-fache des Aussendurchmessers d des Dübelkörpers 1. Diese Werte können jedoch auch variieren.

Der Dübelkörper 1 besteht vorzugsweise aus Blech. Für geringere Belastungen sowie besonders korrosionsgefährdete Anwendungen kann der Dübelkörper 1 jedoch beispielsweise auch aus Kunststoff bestehen.

## Patentansprüche

1. Hülsenförmiges, mittels einer aushärtenden Masse in einem Bohrloch verankerbares Befestigungselement, das wenigstens über einen Teil seiner Länge eingeprägte Bereiche aufweist, dadurch gekennzeichnet, dass die eingeprägten Bereiche (16, 17, 18, 19) einen mehrkantförmigen Querschnitt aufweisen.

2. Befestigungselement nach Anspruch 1, dadurch gekennzeichnet, dass die eingeprägten Bereiche (16, 17, 18, 19) 4-kantförmigen Querschnitt aufweisen.

3. Befestigungselement nach Anspruch 1 oder 2, dadurch gekennzeichnet, dass die axiale Länge (b) der eingeprägten Bereiche (16, 17, 18, 19) etwa das 0,2- bis 0,5-fache des Aussendurchmessers (d) des Befestigungselementes beträgt.

4. Befestigungselement nach einem der Ansprüche 1 bis 3, dadurch gekennzeichnet, dass der axiale Abstand (a) der eingeprägten Bereiche (16, 17, 18, 19) das 0,3- bis 0,5-fache des Aussendurchmessers (d) des Befestigungselementes beträgt.

5. Befestigungselement nach einem der Ansprüche 1 bis 4, dadurch gekennzeichnet, dass die Tiefe (t) der eingeprägten Bereiche (16, 17, 18, 19) zum rückwärtigen Ende (11) des Befestigungselementes hin abnimmt.

6. Befestigungselement nach einem der Ansprüche 1 bis 5, dadurch gekennzeichnet, dass das Befestigungselement an seinem vorderen Ende (10) verschlossen ist.

7. Befestigungselement nach einem der Ansprüche 1 bis 6, dadurch gekennzeichnet, dass das Befestigungselement an seinem rückwärtigen Endbereich mit einem Innengewinde (15) versehen ist.

**Revendications**

1. Elément de fixation en forme de douille susceptible d'être ancré dans un perçage au moyen d'un matériau durcissable, qui présente, du moins sur une partie de sa longueur, des sections embouties, caractérisé en ce que les sections embouties (16, 17, 18, 19) présentent une section transversale polygonale.

2. Elément de fixation selon la revendication 1, caractérisé en ce que les sections embouties (16, 17, 18, 19) présentent une section transversale quadrangulaire.

3. Elément de fixation selon l'une des revendications 1 ou 2, caractérisé en ce que la lonqueur axiale (b) des sections embouties (16, 17, 18, 19) est égale à environ 0,2 à 0,5 fois le diamètre extérieur (d) de l'élément de fixation.

4. Elément de fixation selon l'une quelconque des revendications 1 à 3, caractérisé en ce que l'intervalle axiale (a) entre les sections embouties (16, 17, 18, 19) est égal à 0,3 à 0,5 fois le diamètre extérieur (d) de l'élément de fixation.

5. Elément de fixation selon l'une quelconque des revendications 1 à 4, caractérisé en ce que la profondeur (t) des sections embouties (16, 17, 18, 19) diminue en direction de l'extrémité postérieure (11) de l'élément de fixation.

6. Elément de fixation selon l'une quelconque des revendications 1 à 5, caractérisé en ce qu'il est obturé à son extrémité antérieure (10).

7. Elément de fixation selon l'une quelconque des revendications 1 à 6, caractérisé en ce que sa section terminale postérieure est munie d'un taraudage (15).

**Claims**

1. Sleeve-shaped fastening element which can be anchored by means of a hardening material in a drill-hole and which has impressed regions at least over a part of its length, characterised in that the impressed regions (16, 17, 18, 19) have a polygonal cross-section.

2. Fastening element according to Claim 1, characterised in that the impressed regions (16, 17, 18, 19) have tetragonal cross-section.

3. Fastening element according to Claim 1 or 2, characterised in that the axial length (b) of the impressed regions (16, 17, 18, 19) amounts to approximately 0.2 to 0.5 times the outside diameter (d) of the fastening element.

4. Fastening element according to any one of Claims 1 to 3, characterised in that the axial spacing (a) of the impressed regions (16, 17, 18, 19) amounts to 0.3 to 0.5 times the outside diameter (d) of the fastening element.

5. Fastening element according to any one of Claims 1 to 4, characterised in that the depth (t) of the impressed regions (16, 17, 18, 19) decreases towards the rearward end (11) of the fastening element.

6. Fastening element according to any one of Claims 1 to 5, characterised in that the fastening element is closed at its front end (10).

7. Fastening element according to any one of Claims 1 to 6, characterised in that the fastening element is provided with an internal thread (15) at its rearward end region.

Fig. 1

Fig. 3

Fig. 2